(19) **Europäisches Patentamt / European Patent Office / Office européen des brevets**

(11) **EP 1 536 582 B1**

(12) **EUROPEAN PATENT SPECIFICATION**

(45) Date of publication and mention of the grant of the patent:
**11.02.2009 Bulletin 2009/07**

(51) Int Cl.:
*H04J 3/06* (2006.01)     *H04W 88/08* (2009.01)
*G10L 21/04* (2006.01)

(21) Application number: **05004865.1**

(22) Date of filing: **24.04.2001**

(54) **Methods for changing the size of a jitter buffer and for time alignment, communications system, receiving end, and transcoder**

Verfahren zum ändern der Grösse eines Zitterpuffers und zur Zeitausrichtung, Kommunikationssystem, Empfängerseite und Transcoder

Procédés de changement de la taille d'un tampon de gigue et pour l'alignement temporel, système de communications, extrémité de réception et transcodeur

(84) Designated Contracting States:
**AT BE CH CY DE DK ES FI FR GB GR IE IT LI LU MC NL PT SE TR**

(43) Date of publication of application:
**01.06.2005 Bulletin 2005/22**

(62) Document number(s) of the earlier application(s) in accordance with Art. 76 EPC:
**01931645.4 / 1 382 143**

(73) Proprietor: **Nokia Corporation**
**02150 Espoo (FI)**

(72) Inventors:
• **Kurittu, Antti**
 **01600 Vantaa (FI)**
• **Kirla, Olli**
 **02610 Espoo (FI)**

(74) Representative: **Cohausz & Florack**
**Patent- und Rechtsanwälte**
**Bleichstraße 14**
**40211 Düsseldorf (DE)**

(56) References cited:
**EP-A- 0 279 451      EP-A- 0 681 398**
**US-A- 4 076 958      US-A- 5 664 044**
**US-A- 5 862 232      US-A- 5 920 840**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The invention relates to a method for carrying out a time alignment in a transcoder of a radio communications system, which time alignment is used for decreasing a buffering delay , said buffering delay resulting from buffering speech data encoded by said transcoder before transmitting said speech data over a radio interface of said radio communications system in order to compensate for a phase shift in a framing of said speech data in said transcoder and at said radio interface. Further, the invention relates to such a radio communications system and to a transcoder for a radio communications system and to an apparatus.

BACKGROUND OF THE INVENTION

An example of a packet network is a voice over IP (VoIP) network.

IP telephony or voice over IP (VoIP) enables users to transmit audio signals like voice over the Internet Protocol. Sending voice over the internet is done by inserting speech samples or compressed speech into packets. The packets are then routed independently from each other to their destination according to the IP-address included in each packet.

One drawback in IP telephony is the availability and performance of networks. Although the local networks might be stable and predictable, the Internet is often congested and there are no guarantees that packets are not lost or significantly delayed. Lost packets and long delays have an immediate effect on speech quality, reciprocity and the pace of conversation.

Because of the independent routing of the packets, the packets moreover take variable times to go through the network. The variation in packet arrival times is called jitter. To play out the voice in the receiving end correctly, though, the packets must be in the order of transmission and equally spaced. To achieve this requirement a jitter buffer can be employed. The jitter buffer can be located before or after a decoder used at the receiving end for decoding the speech which was encoded for transmission. In the jitter buffer, the right order of packets can then be assured by checking sequence numbers contained in the packets. Equally contained timestamps can further be used to determine the jitter level in the network and for compensating for the jitter in play out.

The size of the jitter buffer, however, has a contrary effect on the number of packets that are lost and on the end-to-end delay. If the jitter buffer is very small, many packets are lost because they have arrived after their playout point. On the other hand, if the jitter buffer is very large an excessive end-to-end delay appears. Both, packet loss and end-to-end delay, have an effect on speech quality. Therefore, the size of the jitter buffer has to result in an acceptable value for both, packet loss and delay. Since both can vary in time, adaptive jitter buffers have to be employed in order to be able to continuously guarantee a good compromise for the two factors. The size of an adaptive jitter buffer can be changed based on measured delays of received speech packets and measured delay variances between received speech packets.

Known methods adjust the jitter buffer size in the beginning of a talkspurt. At the beginning of a talkspurt and therefore at the end of a pause in speech, the played out speech is not affected by the adjustment of the jitter buffer size. This means, however, that an adjustment has to be delayed until a beginning of a talkspurt occurs and that a voice activity detector (VAD) is needed. Such methods are described e.g. in "An algorithm for playout of packet voice based on adaptive adjustment of talkspurt silence periods", LCN '99, Conference on Local Computer Networks, 1999, Pages 224 - 231, by J. Pinto and K.J. Christensen, and in "Adaptive playout mechanisms for packetized audio applications in wide-area networks", INFOCOM '94, 13th Proceedings IEEE Networking for Global Communications, 1994, Pages 680 - 688, vol.2, by R. Ramjee, J. Kurose, D. Towsley and H. Schulzrinne.

A similar problem with jitter buffers can arise e.g. in voice over ATM networks.

A similar problem can moreover arise during time alignment in GSM (global system for mobile communications) or 3G (third generation) systems. In radio communications systems like GSM or a 3G system, the air interface requires a tight synchronization between uplink and downlink transmission. However, at the start of call or after a handover, the initial phase shift between uplink and downlink framing in a transcoder used on the network side for encoding data for downlink transmissions and decoding data from uplink transmissions is different from the corresponding phase shift at the radio interface. This phase shift can also be seen in the phase shift only of the downlink framing in the transcoder and at a radio interface of the radio communications system. Therefore, a downlink buffering is needed to achieve a correct synchronization for the air interface, which buffer is included in GSM in a base station and in 3G networks in a radio network controller (RNC) of the communications system. The buffering leads to an additional delay of up to one speech frame in the base station in downlink direction. To minimize this buffering delay, a time alignment procedure can be utilized on the network side. The time alignment is used to align the phase shift in the framing of the transcoder and thus to minimizing the buffering delay after a call set-up or handover. During the time alignment, the base station or radio network controller requests the transcoder to carry out a desired time alignment. In the time alignment, the transmission time instant of an encoded speech frame and the following frames need to be advanced or delayed. Thereby the window (one speech frame) of input buffer of linear samples before the encoder has to be slided in to the desired direction by the amount of samples requested by the base station. Presently, a time alignment is carried out by dropping or repeating speech samples, which leads to a deterioration of the speech quality.

US patent 5,664,044 aims at providing a system and method for allowing user-controlled, variable-speed synchronized playback of an existing, digitally-recorded audio/video presentation. The digital data stream is a multiplexed, compressed audio/video data stream such as that specified in the MPEG standard. In one embodiment, the user directly controls the rate of the video playback by setting a video scaling factor. The length of time required to play back an audio frame is then adjusted automatically using the time domain harmonic scaling method so that it approximately matches the length of time a video frame is displayed. The number of frames of compressed digital audio in an audio buffer is monitored and the time domain harmonic scaling factor is adjusted continuously during playback to ensure that the audio buffer does not overflow or underflow. An underflow or overflow condition in the audio buffer would eventually cause a loss of synchronization between the audio and video.

## SUMMARY OF THE INVENTION

It is an object of the invention to improve the time alignment in radio communications systems.

This object is reached on the one hand with a method for carrying out a time alignment in a transcoder of a radio communications system, which time alignment is used for decreasing a buffering delay, said buffering delay resulting from buffering speech data encoded by said transcoder before transmitting said speech data over a radio interface of said radio communications system in order to compensate for a phase shift in a framing of said speech data by said transcoder and by said radio interface. First, it is determined whether a time alignment has to be carried out.

In case it was determined that a time alignment has to be carried out, speech data is condensed for achieving the required time alignment by discarding at least one frame of speech data. Gain parameters and Linear Predictive Coding (LPC) coefficients of frames of speech data surrounding the at least one discarded frame are moreover modified to smoothly combine the frames surrounding the at least one discarded frame.

The object of the invention is reached on the other hand with a radio communications system comprising at least one radio interface for transmitting encoded speech data and at least one transcoder. Said transcoder includes at least one encoder for encoding speech data to be used for a transmission via said radio interface. The transcoder further includes processing means for carrying out a time alignment on encoded speech samples according to the proposed method. The radio communications system moreover comprises buffering means arranged between said radio interface and said transcoder for buffering speech data encoded by said transcoder before transmitting said encoded speech data via said radio interface in order to compensate for a phase shift in a framing of said speech data by said transcoder and by said radio interface. Finally, the radio communications system comprises processing means for determining whether and to which extend the speech samples encoded by said encoder have to be time aligned before transmission in order to minimize a buffering delay for encoded speech data resulting from a buffering by said buffering means. The object of the invention is equally reached with such a transcoder for a radio communications system.

The invention proceeds from the idea that the time alignment in a transcoder of a radio communications system could be achieved with less effect on the encoded speech samples, if it is not carried out by simply dropping or repeating speech samples, but rather by compensating for the time alignment in a more sophisticated way that results in less effect on the quality of the speech data. The proposed compensation of a time alignment ensures only smooth transitions within the aligned speech data. It is thus an advantage of the invention that it enables in a simple way an improved time alignment.

It is to be noted that strictly speaking the mentioned phase shift relates to the time difference of sending and receiving the first data bit of a frame on uplink vs. downlink, i.e. how data frames aligned in time at an observation point in different transmission directions. For GSM, e.g., initially this time difference is not equal between air and abis interfaces. After the time alignment, the time difference should be almost equal, i.e. minimal buffering.

It becomes apparent that the invention is based on changing the amount of currently available audio data based on this existing audio data such that a necessary change can be achieved without severe deterioration of the audio data during ongoing transmission.

The invention can be employed in particular, though not exclusively, in a Media Gateway as well as in GSM and 3G time alignments.

## BRIEF DESCRIPTION OF THE FIGURES

In the following, the invention is explained in more detail with reference to drawings, of which

Fig. 1      illustrates the principle of three approaches for changing the jitter buffer size;

Fig. 2      shows diagrams illustrating an increase in jitter buffer size according to the first approach based on a method for bad frame handling;

Fig. 3      shows diagrams illustrating a decrease in jitter buffer size according to the first approach ;

Fig. 4      shows diagrams illustrating the principle of a time domain time scaling according to a secondapproach;

Fig. 5      is a flow chart of the second approach;

Fig. 6      shows diagrams further illustrating the second approach;

Fig. 7      shows diagrams illustrating the principle of a third approachfrequency domain time scaling;

Fig. 8      is a flow chart of the third approach;

Fig. 9      shows jitter buffer signals before and after time scaling according to the third approach;

Fig. 10     is a flow chart illustrating a fourth approach changing a jitter buffer size in the parametric domain;

Fig. 11     schematically shows a part of a first system;

Fig. 12     schematically shows a part of a second system; and

Fig. 13     schematically shows a part of a third system; and

Fig. 14     schematically shows a communications system in which a time alignment according to the invention can be employed.

## DETAILED DESCRIPTION OF THE INVENTION

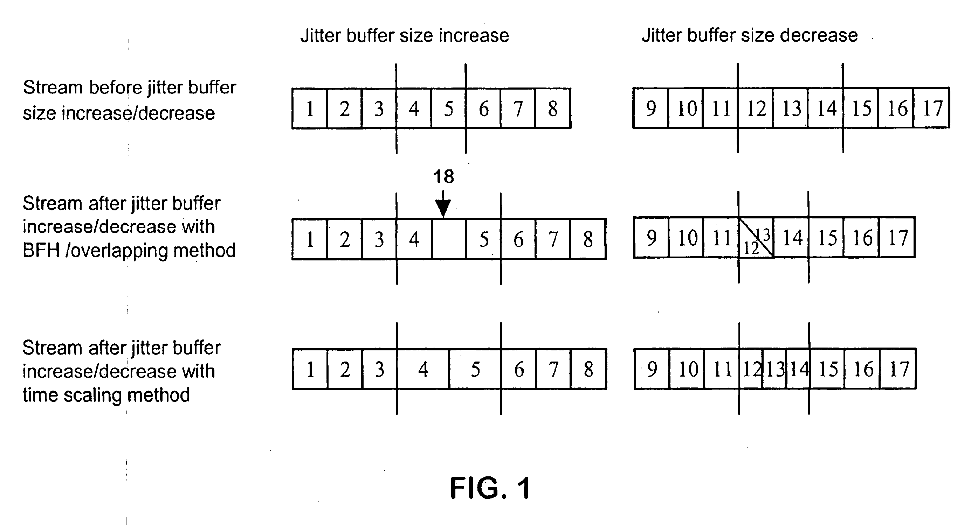

On the left hand side of the figure 1, an increase of a packet stream is shown, while on the left hand side, a decrease of a packet stream is shown. The upper part of the figure shows for both cases original streams, the middle part for both cases streams treated according to a first approach and the lower part for both cases streams treated according to a second or third approach.

In the upper left part of figure 1, a first packet stream with eight original packets 1 to 8 including speech data is indicated. This packet stream is contained in a jitter buffer of a receiving end in a voice over IP network before an increase of the jitter buffer size becomes necessary. In the upper right part of figure 1, a second packet stream with nine packets 9 to 17 including speech data is indicated. This packet streams is contained in a jitter buffer of a receiving end in a voice over IP network before a decrease of the jitter buffer size becomes necessary.

On the left hand side in the middle of figure 1, the first packet stream is shown after an increase of the jitter buffer size. The jitter buffer size was increased by providing an empty space of the length of one packet between the original packet 4 and the original packet 5 of the packet stream in the jitter buffer. This empty space is filled by a packet 18 generated according to a bad frame handling BFH as defined in the above mentioned ITU-T G.711 codec, the empty space simply being considered as lost packet. The size of the original stream is thus expanded by the length of one packet.

On the right hand side in the middle of figure 1, in contrast, the second packet stream is shown after a decrease of the jitter buffer size. It is realized in the first described approach by overlapping two consecutive packets, in this example, the original packet 12 and the original packet 13 of the second packet stream. The overlapping reduces the number of speech samples contained in the jitter buffer in the length of one packet, the size of which can thus be reduced by the length of one packet.

On the left hand side at the bottom of figure 1, the first packet stream is shown again after an increase of the jitter buffer size which resulted in an empty space of the length of one packet between the original packets 4 and 5 of the first packet stream. This time, however, the original packets 4 and 5 were time scaled in the time domain or in the frequency domain according to the second or third approach in order to fill the resulting empty space. That means the data of original packets 4 and 5 was expanded to fill the space of three instead of two packets. The size of the original stream was thus expanded by the length of one packet.

On the right hand side at the bottom of figure 1, finally, the second packet stream is shown again after a decrease of the jitter buffer size. The corresponding decrease of the data stream was realized according to the second or third approach by time scaling the data of three original packets to the length of two packets. In the presented example, the data of the original packets 12 to 14 of the second packet stream were condensed to the length of two packets. The size of the original stream was thus reduced by the length of one packet.

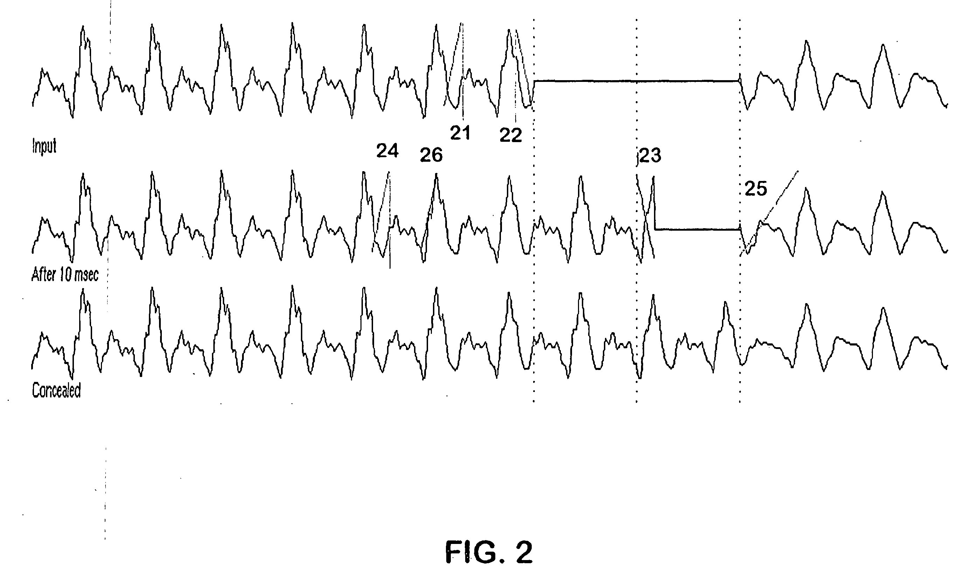

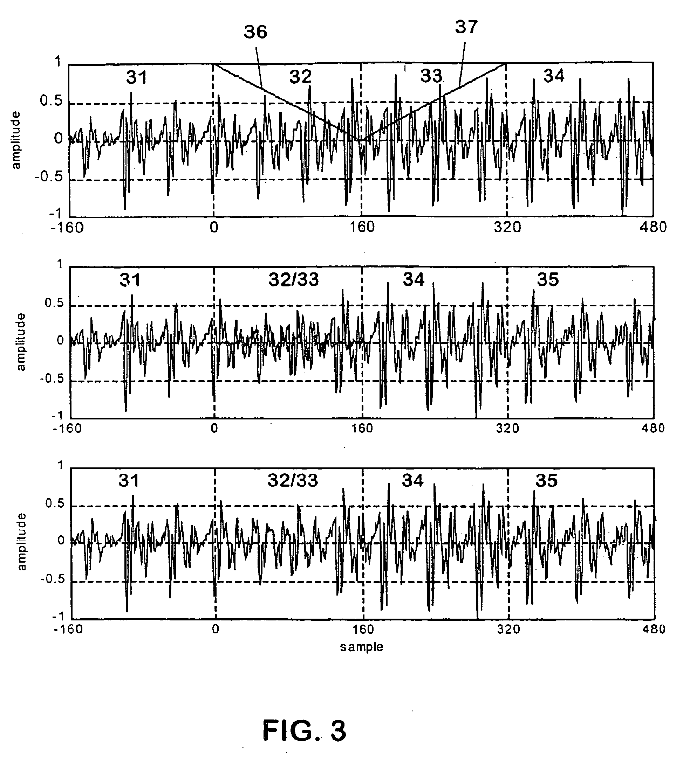

The increase and decrease of the jitter buffer size according to the first approach will now be explained in detail with reference to figures 2 and 3.

Figure 2 is taken from the ITU-T G.711 Appendix specification, where it is used for illustrating lost packet concealment, while here it is used for illustrating the first approach , in which the ITU-T bad frame handler is called between adjacent packets for compensating for an increase of the jitter buffer size.

Figure 2 shows three diagrams which depict the amplitude of signals over the sample number of the signals. In the first diagram the signals input to the jitter buffer are shown, while a second and third diagram show synthesized speech at two different points in time. The diagrams illustrate how the jitter buffer size is increased according to the first approach corresponding to a bad frame handling presented in the above cited ITU-T G.711 codec. As mentioned above, the cited standard describes a packet loss concealment method for the ITU-T G.711 codec based on pitch waveform replication.

The packet size employed in this approach is 20ms, which corresponds to 160 samples. The BFH was modified to be able to use 20 ms packets.

The arrived packets as well as the synthesised packets are saved in a history buffer of a length of 390 samples.

After an increase of the size of the jitter buffer by the length of two packets, there is an empty space in the jitter buffer corresponding to two lost packets, indicated in the first diagram of figure 2 by a horizontal line connecting the received signals. At the start of each empty space, the contents of the history buffer are copied to a pitch buffer that is used throughout the empty space to find a synthetic waveform that can conceal the empty space. In the situation in the first diagram, the samples that are to the left of the two empty packets i.e. the samples that have arrived before the increase of size, form the current content of the pitch buffer.

A cross-correlation method is now used to calculate a pitch period estimate from the pitch buffer. As illustrated in the second diagram of figure 2, the first empty packet is then replaced by replicating the waveform that starts one pitch period length back from the end of the history buffer, indicated with a vertical line referred to by 21, in the required number. To ensure a smooth transition between the real and the synthesized speech, as well as between repeated pitch period length waveforms, the last 30 samples in the history buffer, in the region limited by a vertical and an inclined line referred to by 22 in the first diagram, are overlap added with the 30 samples preceding the synthetic waveform in the region limited by the vertical line 21 and a connected inclined line. The overlapped signal replaces the last 30 samples 22 in the pitch buffer. This overlap add procedure causes an algorithmic delay of 3.75 ms, or 30 samples. In the same way, a smooth transition between repeated pitch period length waveforms is ensured.

The synthetic waveform is moreover extended beyond the duration of the empty packets to ensure a smooth transition between the synthetic waveform and the subsequently received signal. The length of the extension 23 is 4 ms. In the end of the empty space, the extension is raised by 4 ms per additional added empty packet. The maximum extension length is 10 ms. In the end of the empty space this extension is overlapped with the signal of the first packet after the empty space, the overlap region being indicated in the figure with the inclined line 25. The second diagram of figure 2 illustrates the state of the synthesized signal after 10 ms, when samples of one packet length have been replicated.

In case there is a second added empty packet, as in the first diagram of figure 2, another pitch period is added to the pitch buffer. Now the waveform to be replicated is two pitch periods long and starts from the vertical line referred to by 24. Next, the 30 samples 24 before the pitch buffer are overlap added with the last 30 samples 22 in the pitch buffer. Again, the overlapped signal replaces the last 30 samples in region 22 in the pitch buffer. A smooth transition between one and two pitch period length signals is ensured by performing an overlap add between the regions indicated by 23 and 26. Region 26 is placed by subtracting pitch periods until the pitch pointer is in the first wavelength of the currently used portion of the pitch buffer. The result of the overlap adding replaces the samples in region 23. The third diagram of figure 2 shows the synthesized signal in which an empty space of the length of two packets added for an increase in the size of the jitter buffer was concealed.

If the size of the jitter buffer is further increased, another pitch period would be added to the pitch buffer. However, if the increase in jitter buffer size is large it is more likely that the replacement signal falsifies the original signal. Attenuation is used to diminish this problem. The first replacement packet is not attenuated. The second packet is attenuated with a linear ramp. The end of the packet is attenuated by 50 % compared to the start with the used packet size of 20 ms. This attenuation is also used for the following packets. This means that after 3 packets (60 ms) signal amplitude is zero.

Similarly, parametric speech coders' bad frame handling methods can be employed for compensating for an increase of the jitter buffer size.

Figure 3 illustrates how the jitter buffer size is decreased according to the first approach by overlapping two adjacent packets. To this end, the figure shows three diagrams depicting the amplitude of signals over the sample number of the signals.

The first diagram of figure 3 shows the signals of four packets 31-34 presently stored in a jitter buffer before a decrease in size, each packet containing 160 samples. Now, the size of the jitter buffer is to be decreased by one packet. To this end, two adjacent packets 32, 33 are multiplied with a downramp 36 and an upramp 37 function respectively, as indicated in the first diagram. Then, the multiplied packets 32, 33 of the signals are overlapped, which is shown in the second diagram of figure 3. Finally, the overlapped part of the signal 32/33 is added as shown in the third diagram of figure 3, the fourth packet now being formed by the packet 35 following the original fourth packet 34. The result of the overlap adding is a signal comprising one packet less than the original signal, and this removed packet enables a decrease of the size of the jitter buffer.

When the jitter buffer size is to be decreased by more than one packet at a time, not adjacent but spaced apart packets are overlap added, and the packets in between are discarded. For example, if the jitter buffer size is to be changed from three packets to one, the first packet in the jitter buffer is overlap added with the third packet in the jitter buffer as described for packets 32 and 33 with reference to figure 3, and the second packet is discard.

In a second approach, an immediate increase and decrease of a jitter buffer size is enabled by a time domain time scaling method, and more particularly by a waveform similarity overlap add (WSOLA) method described in the above mentioned document "An overlap-add technique based on waveform similarity (WSOLA) for high quality time-scale modification of speech".

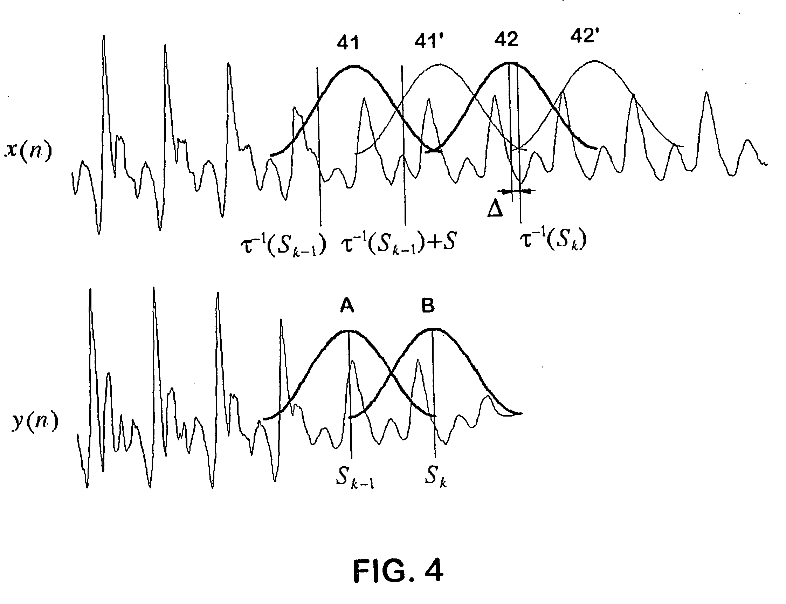

The WSOLA method is illustrated for an exemplary time scaling resulting in a reduction of samples of a signal in figure 4, which comprises in the upper part an original waveform x(n) and in the lower part a synthetic waveform y(n) constructed with suitable values of the original waveform x(n). n indicates the respective sample of the signals. The WSOLA method is based on constructing a synthetic waveform that maintains maximal local similarity to the original signal. The synthetic waveform y(n) and original waveform x(n) have maximal similarity around time instances specified by a time warping function $\tau^{-1}(n)$.

In figure 4, the input segment 41 of original waveform x(n) was the last segment excised from the original waveform x(n). This segment 41 is the last segment that was added as a synthesis segment A to the synthesized waveform y(n). Segment A was overlap-added to the output signal y(n) at time $S_{k-1}=(k-1)S$, S being the interval between segments in the synthesized signal y(n).

The next synthesis segment B is to be excised from the input signal x(n) around time instant $\tau^{-1}(S_k)$, and overlap added to the output signal y(n) at time $S_k=kS$. As can be seen in the figure, segment 41' of the input signal x(n) would overlap perfectly with segment 41 of the input signal x(n). Segment 41' is therefore used as a template when choosing a segment 42 around time instant $\tau^{-1}(S_k)$ of the input signal x(n) which is to be used as next synthesis segment B. A similarity measure between segment 41' and segment 42 is computed to find the optimal shifting value $\Delta$ that maximizes the similarity between the segments. The next synthesis segment B is thus selected by finding the best match 42 for the template 41' around time instant $\tau^{-1}(S_k)$. The best match must be within the tolerance interval of $\Delta$, which tolerance interval lies between a predetermined minimum $\Delta_{min}$ and a predetermined maximum $\Delta_{max}$ value. After overlap-adding the synthesis segment 42 to the output signal as segment B, segment 42' of the input signal x(n) is used as the next template.

The WSOLA method uses regularly spaced synthesis instants $S_k=kS$. The analysis and synthesis window length is constant. If the analysis/synthesis window is chosen in such a way that,

$$\sum_k v(n-kS) = 1 \tag{1}$$

and if the analysis/synthesis window is symmetrical, the synthesis equation for the WSOLA method is

$$y(n) = \sum_k v(n-kS)x(n+\tau^{-1}(kS)-kS+\Delta_k). \tag{2}$$

By selecting a different time warping function, the same method can be employed not only for reducing the samples of a signal but also for increasing the amount of samples of a signal.

It is important that the transition from the original signal to the time-scaled signal is smooth. In addition, the pitch period should not change during the jumps from the signal used as received to the time scaled signal. As was explained previously, WSOLA time scaling preserves the pitch period. However, when time scaling is performed for a part in the middle of the speech signal, some discontinuity on either the beginning, or the end of the time scaled signal can not be avoided sometimes.

In order to decrease the effect of such a phase mismatch, it is proposed for the second approach to slightly modify the method described with reference to figure 4. The modified WSOLA (MWSOLA) method uses history information and extra extension to decrease the effect of this problem.

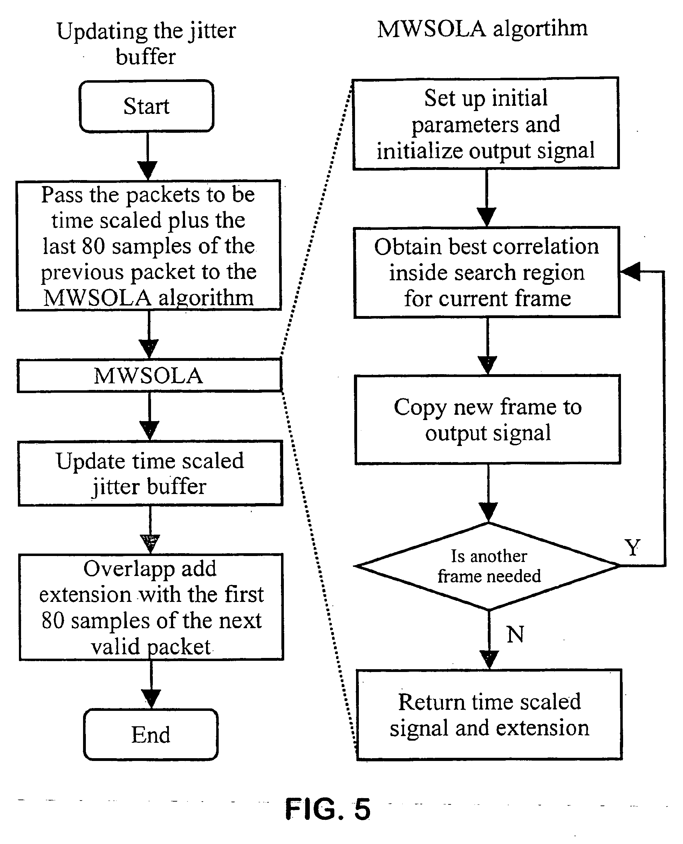

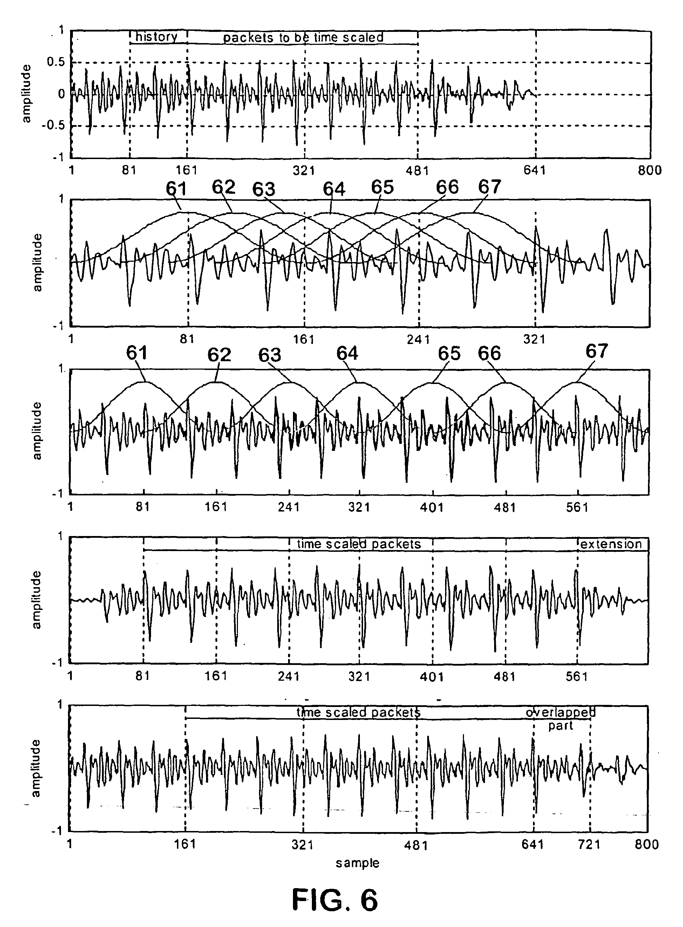

A MWSOLA algorithm using an extension of the time scale for an extra half of a packet length will now be described with reference to the flow chart of figure 5 and to the five diagrams of figure 6. The used packet size is 20 ms, or 160 samples, the sampling rate being 8 kHz. The analysis/ synthesis window used has the same length as the packets.

Figure 5 illustrates the basic process of updating the jitter buffer size using the proposed MWSOLA algorithm. As shown on the left hand side of the flow chart of figure 5, first the packets to be time scaled are chosen. In addition, 1/2 packet length of the previously arrived signal, i.e. 80 samples, are selected as history samples. The selected samples are also indicated in the first diagram of figure 6. After being selected, they are forwarded to the MWSOLA algorithm.

The MWSOLA algorithm, which is shown in more detail on the right hand side of figure 5, is then used to provide the desired time scaling on the selected signals as described with reference to figure 4.

The analysis/synthesis window is created by modifying a Hanning window so that the condition of equation (1) is fulfilled. The time warping function $\tau^{-1}(n)$ is constructed differently for time scale expansion and compression, i.e. for an increase and for a decrease of the jitter buffer size. The time warping function and the limits of the search region $\Delta$ ($\Delta= [\Delta_{min}...\Delta_{max}]$) are chosen in such a way that a good signal variation is obtained. By setting the limits of the search region and the time warping function correctly, it can be avoided that adjacent analysis frames are chosen repeatedly. Finally, the first frame from the input signal is copied to an output signal which is to substitute the original signal. This ensures that the change from the preceding original signal to the time scaled signal is smooth.

After the initial parameters like the time warping function and the limits for the search region are set and an output signal is initialized, a loop is used to find new frames for the time scaled output signal as long as needed. A best match between the last L samples of the previous frame and the first L samples of the new frame is used as an indicator in finding the next frame. The used length L of the correlation is 1/2 * window length = 80 samples. The search region $\Delta$ ($\Delta= [\Delta_{min}...\Delta_{max}]$) should be longer than the maximum pitch period in samples, so that a correct synchronization between consecutive frames is possible.

The second diagram of figure 6 shows how the analysis windows 61-67 defining different segments are placed in the MWSOLA input signal when time scaling two packets to three packets.

The third diagram of figure 6 shows how overlapping the synthesis segments succeeded. As can be seen, the different windows 61-67 overlap, in this case, quite nicely.

Overlap adding of all the analysis/synthesis frames results in the time scaled signal shown in the fourth diagram of figure 6, which constitutes the output signal of the MWSOLA algorithm. The MWSOLA algorithm returns the new time scaled packets and an extension to be overlap added with the first 1/2 packet length of the next arriving packet.

As shown again on the left hand side of the flow chart of figure 5, the jitter buffer is then updated with the time scaled signals and the extension is overlap added with the next arriving packet. The resulting signal can be seen in the fifth diagram of figure 6.

This procedure decreases the effect of the phase and amplitude mismatches between the time-scaled signal and the valid signal.

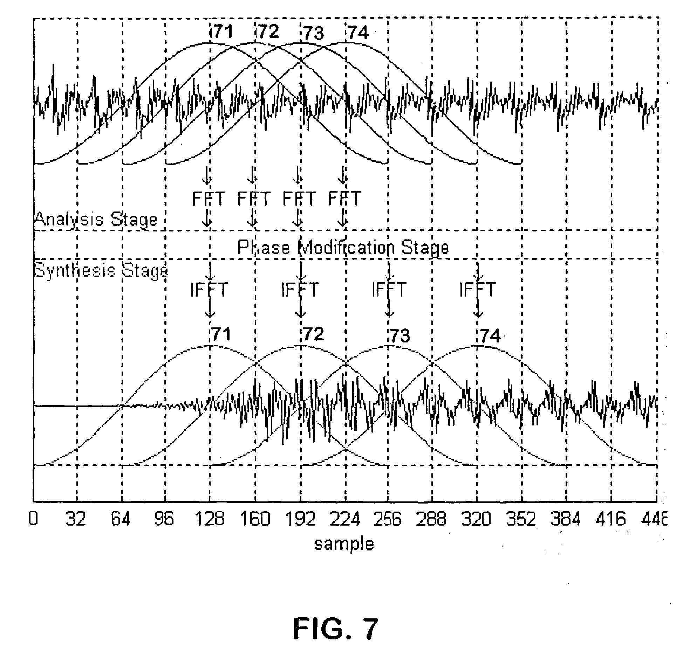

A phase vocoder based jitter buffer scaling method will now be described with reference to figures 7 to 9 as third approach. This method constitutes a frequency domain time scaling method.

The phase vocoder time scale modification method is based on taking short-time Fourier transforms (STFT) of the speech signal in the jitter buffer as described in the above mentioned document "Applications of Digital Signal Processing to Audio and Acoustics". Figure 7 illustrates this technique. The phase vocoder based time scale modification comprises an analyzing stage, indicated in the upper part of figure 7, a phase modification stage indicated in the middle of figure 7, and a synthesis stage indicated in the lower part of figure 7.

In the analyzing stage, short-time Fourier transforms are taken from overlapping windowed parts 71-74 of a received signal. In particular, discrete time Fourier transforms (DFT) as described by J. Laroche and M. Dolson in "Improved Phase Vocoder Time-Scale Modification of Audio", IEEE Transactions on Speech and Audio Processing, Vol. 7, No. 3, May 1999. pp. 323-332, can be employed in the phase vocoder analysis stage. This means that both, the frequency scale and the time scale representation of the signal, are discrete. The analysis time instants $t_a^u$ are regularly spaced by $R_a$ samples, $t_a^u = u \ast R_a$. $R_a$ is called the analysis hop factor. The short time Fourier transform is then

$$X\left(t_a^u,\Omega_k\right)= \sum_{n=-\infty}^{\infty} h(n)x\left(t_a^u + n\right)e^{-j\Omega_k n} \, , \qquad (3)$$

where x is the original signal, h(n) the analysis window and $\Omega_k=2pi\ast k/N$ the center frequency of the $k^{th}$ vocoder channel. The voocoder channels can also be called bins. N is the size of the DFT, where N must be longer than the length of the analysis window. In practical solutions, the DFT is usually obtained with the Fast Fourier Transform (FFT). The analysis window's cutoff frequency for the standard (Hanning, Hamming) windows requires the analysis windows to overlap by at least 75%. After the analysis FFT, the signal is represented by horizontal vocoder channels and vertical analysis time instants.

In the phase modification stage, the time scale of the speech signal is modified by setting the analysis hop factor $R_a$ different from a to be used synthesis hop factor $R_s$, as described in the mentioned document "Improved Phase Vocoder Time-Scale Modification of Audio". The new time-evolution of the sine waves is achieved by setting

$|Y(t_s^u,\Omega_k)| = |X(t_a^u, \Omega_k)|$ and by calculating new phase values for $Y(t_s^u, \Omega_k)$.

The new phase values for $Y$ ( $t_s^u$ , $\Omega_k$ ) are calculated as follows. A process called phase unwrapping is used, where the phase increment between two consecutive frames is used to estimate the instantaneous frequency of a nearby sinusoid in each channel k. First the heterodyned phase increment is calculated by

$$\Delta \Phi_k^u = \angle X\!\left(t_a^u, \Omega_k\right) - \angle X\!\left(t_a^{u-1}, \Omega_k\right) - R_a \Omega_k \; . \tag{4}$$

Then by adding or subtracting multiples of $2\pi$ so that the result of (7) lies between $\pm \pi$, the principal determination ( $\Delta_p \Phi_k^u$ ) of the heterodyned phase increment is obtained.

The instantaneous frequency is then calculated using

$$\omega_k\!\left(t_a^u\right) = \Omega_k + \frac{1}{R_a} \Delta_p \Phi_k^u \quad . \tag{5}$$

The instantaneous frequency is determined because the FFT is calculated only for discrete frequencies $\Omega_k$. Thus the FFT does not necessarily represent the windowed signal exactly.

The time scaled phases of the STFT at a time $t^u{}_s$ are calculated from

$$\angle Y\!\left(t_s^u, \Omega_k\right) = \angle Y\!\left(t_s^{u-1}, \Omega_k\right) + R_s \omega_k\!\left(t_a^u\right) . \tag{6}$$

The choice of initial synthesis phases $\angle Y\!\left(t_s^0, \Omega_k\right)$ is important for good speech quality. In the above mentioned document "Improved Phase Vocoder Time-Scale Modification of Audio", a standard initialization setting of

$$\angle Y\!\left(t_s^0, \Omega_k\right) = \angle X\!\left(t_a^0, \Omega_k\right) \tag{7}$$

is recommended, which makes a switch from a non time scaled signal to a time scaled signal possible without phase discontinuity. This is an important attribute for jitter buffer time scaling.

After the phases values for $Y$ ( $t_s^u$ , $\Omega_k$ ) are obtained, the signal can be reconstructed in a synthesis stage.

In the synthesis stage, the modified short time Fourier transforms $Y(t_s{}^u, \Omega_k)$ are first inverse Fourier transformed with the equation

$$y_u(n) = \frac{1}{N} \sum_{k=0}^{N-1} Y\!\left(t_s^u, \Omega_k\right) e^{j\Omega_k n} \; . \tag{8}$$

The synthesis time instants are set $t_s^u = u * R_s$ . Finally the short-time signals are multiplied by a synthesis window w(n) and are summed, together giving the output signal y(n):

$$y(n) = \sum_{u=-\infty}^{\infty} w\!\left(n - t_s^u\right) y_u\!\left(n - t_s^u\right) . \tag{9}$$

The distance between the analysis windows is different from the distance between the synthesis windows due to the time scale modification, therefore a time extension or compression of the received jitter buffer data is achieved. Synchronisation between overlapping synthesis windows was achieved by modifying the phases in the STFT.

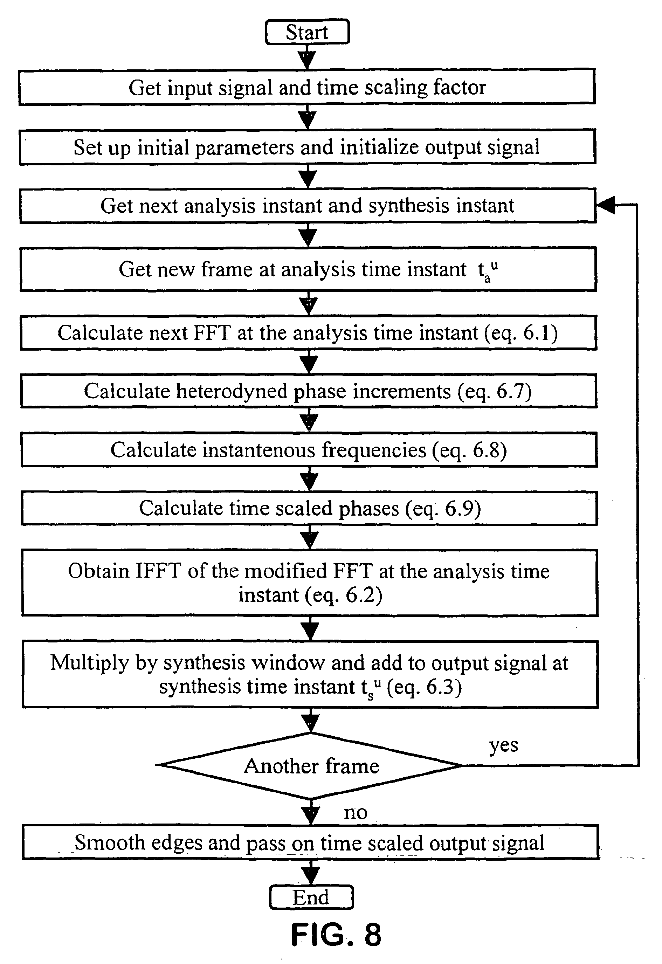

The use of the phase vocoder based time scaling for increasing or decreasing the size of a jitter buffer is illustrated in the flow chart of figure 8.

First, the input signal is received and a time scaling factor is set.

The algorithm is then initialized by setting analysis and synthesis hop sizes, and by setting the analysis and synthesis time instants. When doing this, a few constraints have to be taken into account, which have been listed e.g. in the above mentioned document "Applications of Digital Signal Processing to Audio and Acoustics". The cutoff frequency of the analysis window must satisfy $w_h < \min_i \Delta w_i$, i.e. the cutoff frequency must be less than the spacing between two sinusoids. Further, the length of the analysis window must be small enough so that the amplitudes and instantaneous frequencies of the sinusoids can be considered constants inside the analysis window. Finally, to enable phase unwrapping, the cutoff frequency and the analysis rate must satisfy $w_h Ra < \pi$. The cutoff frequency for standard analysis windows (Hamming, Hanning) is $W_h \approx 4\pi/Nw$, where Nw is the length of the analysis window.

As further initial parameter, the number of frames to process is calculated. This number is used to determine how many times the following loop in figure 8 must be processed. Finally, initial synthesis phases are set, according to equation (7).

After initialization, a vocoder processing loop follows for the actual time scaling. Inside the phase vocoder processing loop, the routine is a straightforward realization of the method presented above. First, the respective next analysis frame is obtained by multiplying the signal with the analysis window at time instant $t_a^u$. Then the FFT of the frame is calculated. The heterodyned phase increment is calculated by setting $R_a$ in equation (4) to $t_a^u - t_a^{u-1}$. Instantaneous frequencies are also obtained by setting $R_a$ in equation (5) to $t_a^u - t_a^{u-1}$. The time scaled phases are obtained from equation (6). Next, the IFFT of the modified FFT of the current frame is calculated according to equation (8). The result of equation (8) is then multiplied by the synthesis window and added to the output signal. Before going through the loop again, the previous analysis and synthesis phases to be used in equations (4) and (6) are updated.

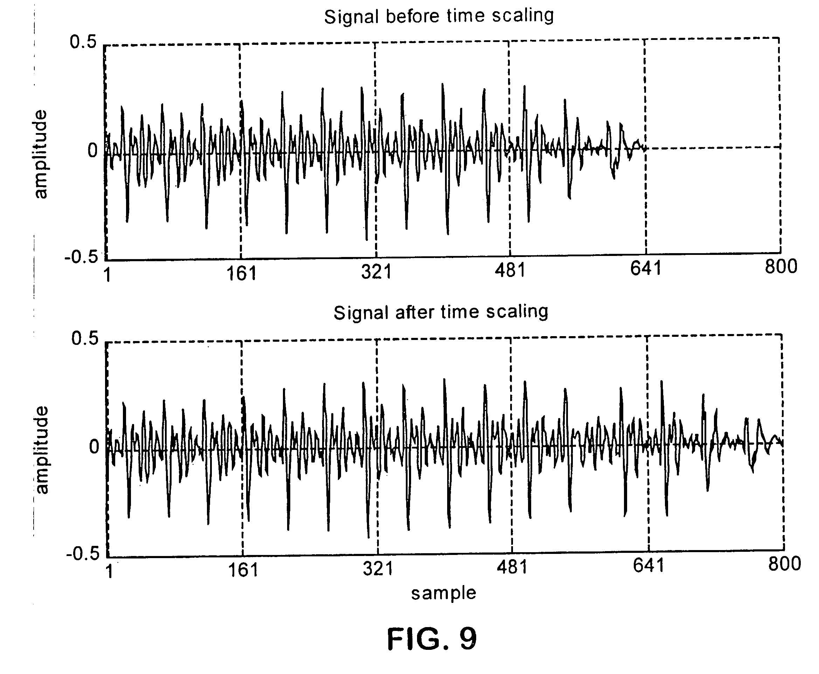

Finally, before outputting the time scaled signal, transitions between the time scaled and the non time scaled signal are smoothed. After this, the jitter buffer size modification can be completed. Figure 9 shows the resulting signal when time scaling two packets into three with the phase vocoder based time scaling. In a first diagram of figure 9, the amplitude of the signal over the samples before time scaling is depicted. In a second diagram of figure 9, the amplitude of the signal over the samples after time scaling is depicted. The two packets with samples 161 to 481 in the first diagram were expanded to three packets with samples 161 to 641.

Before the jitter buffer size is increased, an error concealment should be performed. Moreover, a predetermined number of packets should be received before the jitter buffer size is increased.

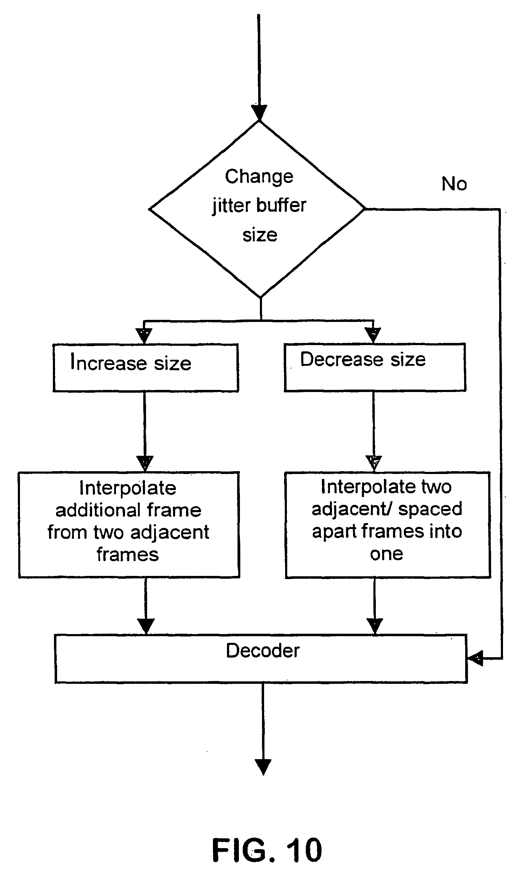

Figure 10 is a flow chart illustrating a fourth approach, which can be used for changing a jitter buffer size in the parametric domain. The parametric coded speech frames are only decoded by a decoder after buffering in the jitter buffer.

In a first step, it is determined whether the jitter buffer size has to be changed. In case it does not have to be changed, the contents of the jitter buffer are directly forwarded to the decoder.

In case it is determined that the jitter buffer size has to be increased, the jitter buffer is increased and additional frames are generated by interpolating an additional frame from two adjacent frames in the parametric domain. The additional frames are used for filling the empty buffer space resulting from an increase in size. Only then the buffered frames are forwarded to the decoder.

In case it is determined that the jitter buffer size has to be decreased, the jitter buffer is decreased and two adjacent or spaced apart frames are interpolated in the parametric domain into one frame. The distance of the two frames used for interpolation to each other depends on the amount of the required decrease of the jitter buffer size. Only then the buffered frames are forwarded to the decoder.

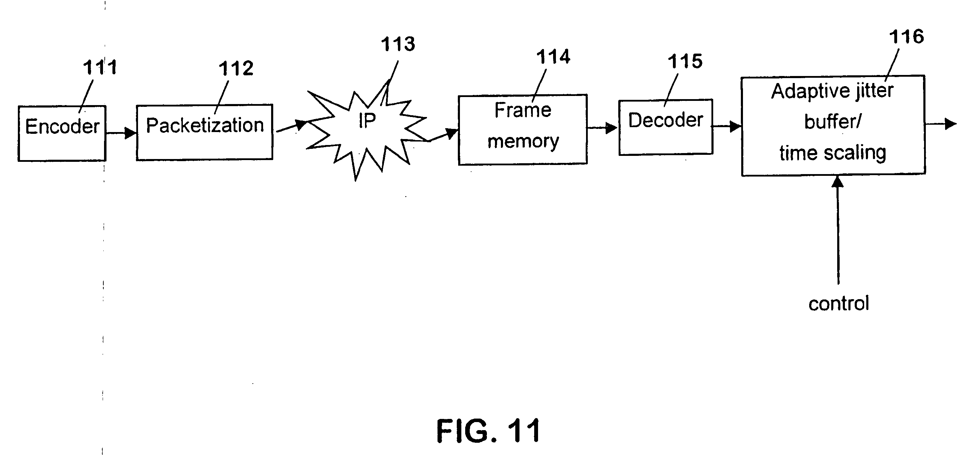

Figures 11 to 13 shows parts of three different voice over IP communications systems.

In the communications system of Figure 11, an encoder 111 and packetization means 112 belong to a transmitting end of the system. The transmitting end is connected to a receiving end via a voice over IP network 113. The receiving end comprises a frame memory 114, which is connected via a decoder 115 to an adaptive jitter buffer 116. The adaptive jitter buffer 116 further has a control input connected to control means and an output to some processing means of the receiving end which are not depicted.

At the transmitting end, speech that is to be transmitted is encoded in the encoder 111 and packetized by the packetization means 112. Each packet is provided with information about its correct position in a packet stream and about the correct distance in time to the other packets. The resulting packets are sent over the voice over IP network 113 to the receiving end.

At the receiving end, the received packets are first reordered in the frame memory 114 in order to bring them again into the original order in which they were transmitted by the transmitting end. The reordered packets are then decoded by the decoder 115 into linear PCM speech. The decoder 115 also performs a bad frame handling on the decoded data. After this, the linear PCM speech packets are forwarded by the decoder 115 to the adaptive jitter buffer 116. In the adaptive jitter buffer, a linear time scaling method can then be employed to increase or decrease the size of the jitter buffer and thereby get more time or less time for the packets to arrive to the frame memory.

The control input of the adaptive jitter buffer 116 is used for indicating to the adaptive jitter buffer 116 whether the size of the jitter buffer 116 should be changed. The decision on that is taken by control means based on the evaluation of the current overall delay and the current variation of delay between the different packets. The control means indicate more specifically to the adaptive jitter buffer 116 whether the size of the jitter buffer 116 is to be increased or decreased and by which amount and which packets are to be selected for time scaling.

In case the control means indicate to the adaptive jitter buffer 116 that its size is to be changed, the adaptive jitter buffer 116 time scales at least part of the presently buffered packets according to the received information, e.g. in a way described in the second or third approach. The jitter buffer 116 is therefore extended by time scale expansion of the currently buffered speech data and reduced by time scale compression of the currently buffered speech data. Alternatively, a method based on a bad frame handling method for increasing the buffer size could be employed for changing the jitter buffer size. This alternative method could for example be the method of the first approach, in which moreover data is overlapped for decreasing the buffer size.

The linear time scaling of Figure 11 can be employed in particular for a low bit rate codec.

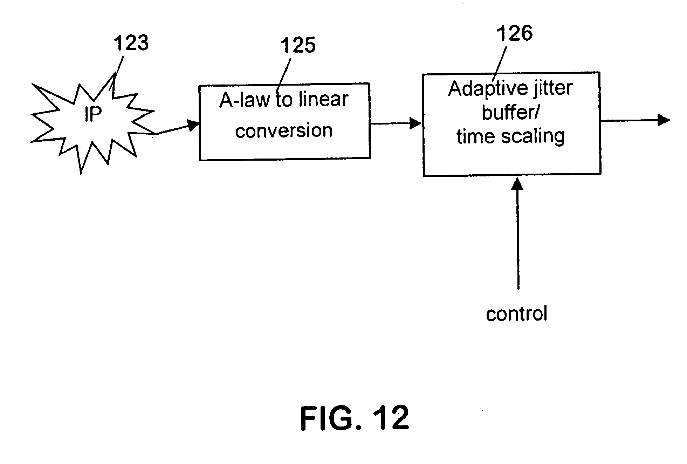

Figure 12 shows a part of a communications system which is based on a linear PCM speech time scaling method. In this system, a transmitting end which corresponds to the one in figure 11 and which is not depicted in figure 12, is connected again via a voice over IP network 123 to the receiving end. The receiving end, however, is designed somewhat differently from the receiving end in the system of figure 11. The receiving end comprises now means for A-law to linear conversion 125 connected to an adaptive jitter buffer 126. The adaptive jitter buffer 126 has again additionally a control input connected to control means and an output to some processing means of the receiving end which are not depicted.

Packets containing speech data which were transmitted by the transmitting end and received by the receiving end via the voice over IP network 123 are first input to the means for A-law to liner conversion 125 of the receiving end, where they are converted to linear PCM data. Subsequently, the packets are reorganized in the adaptive jitter buffer 126. Moreover, the adaptive jitter buffer 126 takes care of a bad frame handling, before forwarding the packets with a correct delay to the processing means.

Control means are used again for deciding when and how to change the jitter buffer size. Whenever necessary, some time scaling method for linear speech, e.g. one of the presented methods, is then used in the adaptive jitter buffer 126 to change its size according to the information received by the control means. Alternatively, a method based on a bad frame handling method could be employed again for changing the jitter buffer, e.g. the method of the first approach. This alternative method could also make use of the bad frame handling method implemented in the jitter buffer anyhow for bad frame handling.

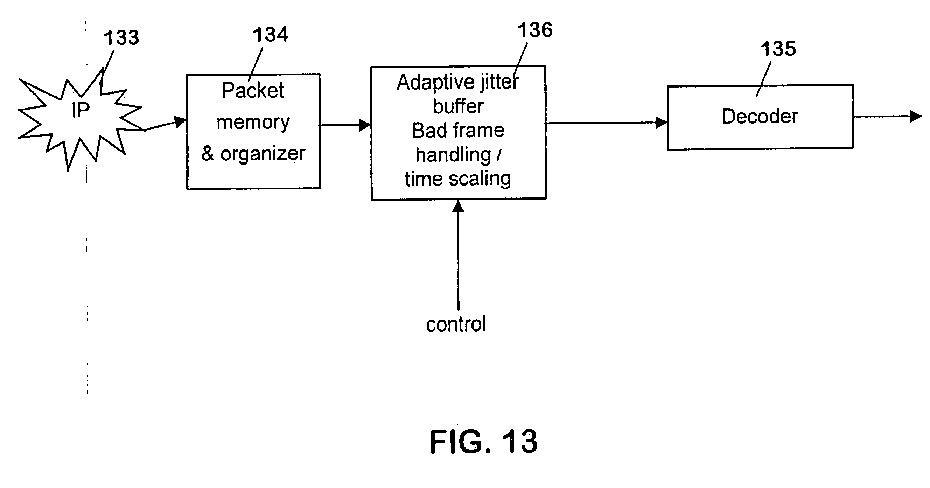

Figure 13, finally, shows a part of a communications system in which a low bit rate codec and a parametric domain time scaling is employed.

Again, a transmitting end corresponding to the one in figure 11 and not being depicted in figure 13, is connected via a voice over IP network 133 to a receiving end. The receiving end comprises a packet memory and organizer unit 134, which is connected via an adaptive jitter buffer 136 to a decoder 135. The adaptive jitter buffer 136 further has a control input connected to control means, and the output of the decoder 135 is connected to some processing means of the receiving end, both, control means and processing means not being depicted.

Packets containing speech data which were transmitted by the transmitting end and received by the receiving end via the voice over IP network 133 are first reordered in the packet memory and organizer unit 134.

The reordered packets are then forwarded directly to the adaptive jitter buffer 136. The jitter buffer 136 applies a bad frame handling on the received packets in the parametric domain. The speech contained in the packets is decoded only after leaving the adaptive jitter buffer 136 in the decoder 135.

As in the other two presented systems, the control means are used for deciding when and how to change the jitter buffer size. Whenever necessary, some time scaling method for parametric speech is then used in the adaptive jitter buffer 136 to change its size according to the information received by the control means. Alternatively, also a bad frame handling method designed for bad frame handling of packets in the parametric domain could be employed for increasing the jitter buffer size. As further alternative, additional frames could be interpolated from two adjacent frames as proposed with reference to figure 10. Decreasing the jitter buffer size could be achieved by discarding a packet or by interpolating two packets into one in the parametric domain as proposed with reference to figure 10. In particular, if a decrease by more than one packet is desired, the packets around the desired amount of packets could be interpolated into one packet.

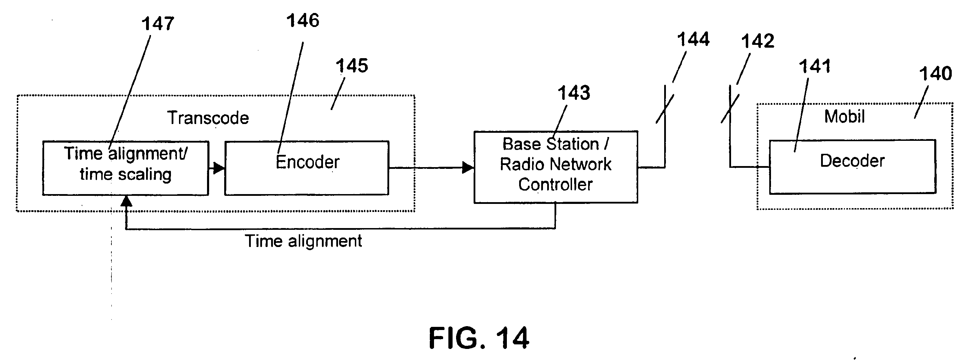

An embodiment of the invention relating to time alignment will now be presented with reference to figure 14, which shows a GSM or 3G radio communications system.

The radio communications system comprises a mobile station 140, of which an antenna 141 and a decoder 142 are depicted. On the other hand, it comprises a radio access network, of which a base station and a radio network controller 143 is depicted as a single block with access to an antenna 144. Base station and radio network controller 143 are further connected to a network transcoder 145 comprising an encoder 146 and time alignment means 147 connected to each other. Base station or radio network controller 143 have moreover a controlling access to the time alignment means 147.

In the radio communications system, speech frames are transmitted in the downlink direction from the radio access network to the mobile station 140 and in the downlink direction from the mobile station 140 to the radio access network. Speech frames that are to be transmitted in the downlink direction are first encoded by the encoder 146 of the transcoder 145, transmitted via the radio network controller, the base station 143 and the antenna 144 of the radio access network, received by the antenna 142 of the mobile station 140 and decoded by the decoder 141 of the mobile station 140.

At the start of call or after a handover, the initial phase shift between uplink and downlink framing in the transcoder may be different from the phase shift of the radio interface, which prevents the required strict synchronous transmissions in uplink and downlink. In GSM, the base station 143 therefore guarantees that the phase shift is equal by buffering all encoded speech frames received from the transcoder 145 for a downlink transmission as long as required. Even though the base station 143 determines the required buffering delay by comparing uplink speech data received from the mobile station 140 with downlink speech data received from the transcoder 145, this means also a compensation of a phase shift of the downlink framing in the transcoder and at radio interface of the system accessed via the antenna 144. In a 3G network, this function is provided by the radio network controller 143. This buffering leads to an additional delay of up to one speech frame in the base station in downlink direction. In order to minimize the buffering delay required for synchronization, in GSM the base station and in 3G the radio network controller 143 requests from the time alignment means 147 of the transcoder 145 to apply a time alignment to the encoded speech frames.

In a time alignment, the transmission time instant of an encoded speech frame and the following frames is advanced or delayed for a specified amount of samples according to the information received the base station or the radio network controller 143 respectively, thus reducing the necessary buffering delay in the base station or the radio network controller 143.

According to the invention, the time alignment is now carried out by the time alignment means 147 by applying a time scaling on the speech frames encoded by the encoder 146, before forwarding them to the radio network controller or the base station 143. In particular, any of the time domain or frequency domain time scaling methods proposed for changing a jitter buffer size can be employed.

As a result, the buffering delay in the base station 143 is reduced as in a known time alignment, but the speech quality is affected less.

**Claims**

1. Method for carrying out a time alignment in a transcoder of a radio communications system, which time alignment is used for decreasing a buffering delay, said buffering delay resulting from buffering speech data encoded by said transcoder before transmitting said speech data over a radio interface of said radio communications system in order to compensate for a phase shift in a framing of said speech data in said transcoder and at said radio interface, the method comprising:

   - determining whether a time alignment has to be carried out; and
   - in case it was determined that a time alignment has to be carried out, condensing speech data for achieving the required time alignment by discarding at least one frame of speech data, wherein gain parameters and Linear Predictive Coding coefficients of frames of speech data surrounding the at least one discarded frame are modified to smoothly combine the frames surrounding the at least one discarded frame.

2. Method according to claim 1, wherein the transcoder is a network transcoder and wherein said speech data is downlink speech data.

3. Radio communications system comprising

   - at least one radio interface for transmitting encoded speech data;

- at least one transcoder (145), which transcoder (145) includes at least one encoder (146) for encoding speech data to be used for a transmission via said radio interface, and which transcoder (145) further includes processing means (147) for carrying out a time alignment on encoded speech samples according to the method of claim 1 or 2; and

- buffering means (143) arranged between said radio interface and said transcoder (145) for buffering speech data encoded by said transcoder (145) before transmitting said encoded speech data via said radio interface in order to compensate for a phase shift in a framing of said speech data by said transcoder (145) and by said radio interface; and

- processing means (143) for determining whether and to which extend the speech samples encoded by said encoder (146) have to be time aligned before transmission in order to minimize a buffering delay for encoded speech data resulting from a buffering by said buffering means (143).

4. Transcoder (145) for a radio communications system comprising:

- at least one encoder (146) for encoding speech data to be used for a transmission via a radio interface of said radio communications system; and
- processing means (147) for carrying out a time alignment according to the method of claim 1 or 2.

5. Apparatus comprising processing means (147) for carrying out a time alignment according to the method of claim 1 or claim 2.

**Patentansprüche**

1. Verfahren zum Ausführen einer Zeitausrichtung in einem Codeumsetzer eines Funkkommunikationssystems, wobei die Zeitausrichtung zum Reduzieren einer Pufferverzögerung benutzt wird, und wobei sich die Pufferverzögerung ergibt aus dem Puffern von Sprachdaten, die von dem Codeumsetzer vor dem Übertragen der Sprachdaten über eine Funkschnittstelle des Funkkommunikationssystems codiert werden, um eine Phasenverschiebung bei einem in Rahmen fassen der Sprachdaten in dem Codeumsetzer und an der Funkschnittstelle auszugleichen, das Verfahren umfassend:

Bestimmen, ob eine Zeitausrichtung ausgeführt werden muss; und
falls bestimmt wurde, dass eine Zeitausrichtung ausgeführt werden muss, Verdichten von Sprachdaten zum Erzielen der erforderlichen Zeitausrichtung durch Verwerfen von zumindest einem Sprachdatenrahmen, wobei Verstärkungsparameter und Linear Predictive Coding-Koeffizienten von Sprachdatenrahmen, die den zumindest einen verworfenen Rahmen umgeben, modifiziert werden zum glatten Zusammenfügen der Rahmen, die den zumindest einen verworfenen Rahmen umgeben.

2. Verfahren nach Anspruch 1, wobei der Codeumsetzer ein Netzcodeumsetzer ist und wobei die Sprachdaten Downlink-Sprachdaten sind.

3. Funkkommunikationssystem, umfassend

- zumindest eine Funkschnittstelle zum Übertragen von codierten Sprachdaten;
- zumindest einen Codeumsetzer (145), wobei der Codeumsetzer (145) zumindest einen Codierer (146) zum Codieren von Sprachdaten beinhaltet, die für eine Übertragung über die Funkschnittstelle benutzt werden sollen, und wobei der Codeumsetzer (145) ferner Verarbeitungsmittel (147) zum Ausführen einer Zeitausrichtung auf codierte Sprachproben gemäß dem Verfahren von Anspruch 1 oder 2 beinhaltet; und
- Puffermittel (143), das zwischen der Funkschnittstelle und dem Codeumsetzer (145) zum Puffern von Sprachdaten, die von dem Codeumsetzer (145) vor dem Übertragen der codierten Sprachdaten über die Funkschnittstelle codiert werden, um eine Phasenverschiebung bei einem in Rahmen fassen der Sprachdaten durch den Codeumsetzer (145) und durch die Funkschnittstelle auszugleichen, angeordnet ist; und
- Verarbeitungsmittel (143) zum Bestimmen, ob und in welchem Ausmaß die von dem Codierer (146) codierten Sprachproben vor der Übertragung zeitlich ausgerichtet werden müssen, um eine Pufferverzögerung für codierte Sprachdaten zu minimieren, die sich aus einem Puffern durch das Puffermittel (143) ergeben.

4. Codeumsetzer (145) für ein Funkkommunikationssystem, umfassend

- zumindest einen Codierer (146) zum Codieren von Sprachdaten, die für eine Übertragung über eine Funkschnittstelle des Funkkommunikationssystems benutzt werden sollen; und
- Verarbeitungsmittel (147) zum Ausführen einer Zeitausrichtung gemäß dem Verfahren von Anspruch 1 oder 2.

**5.** Vorrichtung, umfassend Verarbeitungsmittel (147) zum Ausführen einer Zeitausrichtung gemäß dem Verfahren von Anspruch 1 oder 2.


**Revendications**

**1.** Procédé destiné à effectuer un alignement de temps dans un transcodeur d'un système de radiocommunications, lequel alignement de temps est utilisé pour réduire un délai de mise en tampon, ledit délai de mise en tampon découlant de la mise en tampon de données vocales codées par ledit transcodeur avant de transmettre lesdites données vocales sur une interface radio dudit système de radiocommunications pour compenser un décalage de phase dans un tramage desdites données vocales dans ledit transcodeur et au niveau de ladite interface radio, le procédé comprenant les étapes consistant à :

- déterminer si un alignement de temps doit être effectué ; et
- dans le cas où il est déterminé qu'un alignement de temps doit être effectué, condenser les données vocales pour réaliser l'alignement de temps requis en éliminant au moins une trame de données vocales, dans lequel des paramètres de gain et des coefficients de codage prédictif linéaire de trames de données vocales entourant l'au moins une trame éliminée sont modifiés pour combiner de manière régulière les trames entourant l'au moins une trame éliminée.

**2.** Procédé selon la revendication 1, dans lequel le transcodeur est un transcodeur de réseau et dans lequel lesdites données vocales sont des données vocales de liaison descendante.

**3.** Système de radiocommunications comprenant :

- au moins une interface radio pour transmettre des données vocales codées ;
- au moins un transcodeur (145), lequel transcodeur (145) comprend au moins un codeur (146) pour coder des données vocales à utiliser pour une transmission par le biais de ladite interface radio, et lequel transcodeur (145) comprend en outre des moyens de traitement (147) pour effectuer un alignement de temps sur des échantillons vocaux codés selon le procédé de la revendication 1 ou 2 ; et
- des moyens de mise en tampon (143) agencés entre ladite interface radio et ledit transcodeur (145) pour mettre en tampon des données vocales codées par ledit transcodeur (145) avant de transmettre lesdites données vocales codées par le biais de ladite interface radio pour compenser un décalage de phase dans un tramage desdites données vocales par ledit transcodeur (145) et par ladite interface radio ; et
- des moyens de traitement (143) pour déterminer si et dans quelle mesure les échantillons vocaux codés par ledit codeur (146) doivent être alignés dans le temps avant la transmission pour minimiser un délai de mise en tampon pour des données vocales codées découlant d'une mise en tampon par lesdits moyens de mise en tampon (143).

**4.** Transcodeur (145) pour un système de radiocommunications comprenant :

- au moins un codeur (146) pour coder des données vocales à utiliser pour une transmission par le biais d'une interface radio dudit système de radiocommunications ; et
- des moyens de traitement (147) pour effectuer un alignement de temps selon le procédé de la revendication 1 ou 2.

**5.** Appareil comprenant des moyens de traitement (147) pour effectuer un alignement de temps selon le procédé de la revendication 1 ou 2.

FIG. 1

Input

Concealed

After 10 msec

21 22

24 26

23

25

FIG. 2

EP 1 536 582 B1

FIG. 3

FIG. 4

**Updating the jitter buffer**

```
┌──────────────┐
│    Start     │
└──────────────┘
        │
        ▼
┌──────────────────────┐
│ Pass the packets to be│
│ time scaled plus the  │
│ last 80 samples of the│
│ previous packet to the│
│ MWSOLA algorithm      │
└──────────────────────┘
        │
        ▼
┌──────────────────────┐
│       MWSOLA          │
└──────────────────────┘
        │
        ▼
┌──────────────────────┐
│  Update time scaled   │
│    jitter buffer      │
└──────────────────────┘
        │
        ▼
┌──────────────────────┐
│   Overlapp add        │
│ extension with the first│
│ 80 samples of the next │
│    valid packet        │
└──────────────────────┘
        │
        ▼
┌──────────────┐
│     End      │
└──────────────┘
```

**MWSOLA algortihm**

```
┌──────────────────────┐
│   Set up initial      │
│   parameters and      │
│ initialize output signal│
└──────────────────────┘
        │
        ▼
┌──────────────────────┐
│ Obtain best correlation│◄──┐
│  inside search region │   │
│   for current frame   │   │
└──────────────────────┘   │
        │                   │
        ▼                   │
┌──────────────────────┐   │
│   Copy new frame to   │   │
│    output signal      │   │
└──────────────────────┘   │
        │                   │
        ▼                   │
      ╱────────╲          Y │
     ╱ Is another ╲─────────┘
     ╲ frame needed╱
      ╲────────╱
        │ N
        ▼
┌──────────────────────┐
│  Return time scaled   │
│  signal and extension │
└──────────────────────┘
```

# FIG. 5

FIG. 6

**FIG. 7**

Start

Get input signal and time scaling factor

Set up initial parameters and initialize output signal

Get next analysis instant and synthesis instant

Get new frame at analysis time instant $t_a^u$

Calculate next FFT at the analysis time instant (eq. 6.1)

Calculate heterodyned phase increments (eq. 6.7)

Calculate instantenous frequencies (eq. 6.8)

Calculate time scaled phases (eq. 6.9)

Obtain IFFT of the modified FFT at the analysis time instant (eq. 6.2)

Multiply by synthesis window and add to output signal at synthesis time instant $t_s^u$ (eq. 6.3)

Another frame — yes

no

Smooth edges and pass on time scaled output signal

End

## FIG. 8

Signal before time scaling

Signal after time scaling

FIG. 9

EP 1 536 582 B1

FIG. 10

**FIG. 11**

EP 1 536 582 B1

EP 1 536 582 B1

123

125

126

IP → A-law to linear conversion → Adaptive jitter buffer/ time scaling →

↑
control

**FIG. 12**

EP 1 536 582 B1

133

134

136

135

IP

Packet
memory
& organizer

Adaptive jitter
buffer
Bad frame
handling /
time scaling

Decoder

control

FIG. 13

147      146

145                           144   142

143                    141     140

Transcode

| Time alignment/ time scaling | Encoder |
| --- | --- |

| Base Station / Radio Network Controller |
| --- |

Mobil

| Decoder |
| --- |

Time alignment

**FIG. 14**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5664044 A

### Non-patent literature cited in the description

- **J. PINTO ; K.J. CHRISTENSEN.** An algorithm for playout of packet voice based on adaptive adjustment of talkspurt silence periods. *LCN '99, Conference on Local Computer Networks,* 1999, 224-231
- **R. RAMJEE ; J. KUROSE ; D. TOWSLEY ; H. SCHULZRINNE.** Adaptive playout mechanisms for packetized audio applications in wide-area networks. *INFOCOM '94, 13th Proceedings IEEE Networking for Global Communications,* 1994, vol. 2, 680-688
- **J. LAROCHE ; M. DOLSON.** Improved Phase Vocoder Time-Scale Modification of Audio. *IEEE Transactions on Speech and Audio Processing,* May 1999, vol. 7 (3), 323-332